# EUROPEAN PATENT SPECIFICATION

(11) **EP 0 706 610 B1**
(45) Date of publication and mention of the grant of the patent: **07.06.2000**
(21) Application number: 94919463.3
(22) Date of filing: 28.06.1994
(51) Int. Cl.: F02D 9/04, F02D 9/08, F02D 13/02

(54) **EXHAUST VALVE TIMING CONTROL RESPONSIVE TO ENGINE KNOCK AND TORQUE**
AUSPUFFVENTILZEITREGLER DER AUF KLOPFEN UND DREHKRAFT REAGIERT
COMMANDE DE SYNCHRONISATION DE LA SOUPAPE D'ECHAPPEMENT REAGISSANT AU CLIQUETIS ET AU COUPLE DU MOTEUR

(30) Priority: 30.06.1993 AU PL971693
(43) Date of publication of application: 17.04.1996
(73) Proprietor: ORBITAL ENGINE COMPANY (AUSTRALIA) PTY. LTD., Balcatta, Western Australia 6021 (AU)
(72) Inventor: STANNARD, Julian, Mark, North Perth, W.A. 6006 (AU); HOUSTON, Rodney, Alexander, Kingsley, W.A. 6026 (AU)
(74) Representative: Lerwill, John
(86) International application number: PCT/AU94/00352
(87) International publication number: WO 95/01503

(56) References cited:
- EP-A- 0 287 038
- GB-A- 2 223 806
- PATENT ABSTRACTS OF JAPAN, M-966, page 127; & JP,A,2 042 144 (YAMAHA MOTOR CO. LTD.), 13 February 1990 (13.02.90), abstract.

## Description

This invention relates to the management of the operation of an internal combustion engine having a valve associated with at least one of the exhaust ports of the combustion chambers of the engine, and in particular to the control of knock in such an engine.

It has been known to provide a valve in association with the exhaust port of each cylinder of a two stroke cycle engine for the purpose of varying the timing of the commencement of the exhausting of combustion gases from the engine cylinders. The presence of such an exhaust valve can significantly improve the engine operation over the normal range of speeds and loads. For example, in some applications, by way of the exhaust valve, the timing of the opening of the exhaust port is delayed at low to medium engine loads and speeds in order to improve the stability of the operation of the engine, and at higher engine loads and speeds the opening of the exhaust port is advanced so as to open earlier in the expansion stroke resulting in a higher torque and power output of the engine when coupled with an appropriately tuned exhaust system.

A tuned exhaust system is one in which pressure pulses, or "plugging" pulses as they are commonly known, which are generated in an engine exhaust system by the exhausting of exhaust gas from a first cylinder, are used to control or restrict the exhausting of exhaust gas from a second cylinder. This arrangement, sometimes also referred to as "cross-charging", is commonly used in engine exhaust systems and is essentially affected by way of the exhaust system configuration and design. Typically used to enable the engine to deliver a greater power output at medium to high loads, this arrangement requires that the exhaust system be tuned for a certain range of engine speeds. Accordingly, when the engine is operating above a certain speed or within such a particular engine speed range, the exhaust system is said to be "tuning" the engine.

When the exhaust valve is used solely for these purposes, it is commonly referred to as a "power valve", and such power valves have in the past been commonly used in two stroke cycle engines as installed in motorcycles.

More recently, it has been proposed in the applicant's Australian Patent No. 592990 to provide an exhaust valve for the exhaust port of each cylinder of a multi-cylinder two stroke cycle engine, and by virtue of an electronic control system, varying the relationship of the valve to the exhaust port for the purpose of controlling the combustion process in the respective cylinders of the engine to contribute to the control of contaminants in the exhaust gas released from the engine. In that proposal, the exhaust valve of each cylinder of the engine is coupled to a common control mechanism under the management of an electronic control unit (ECU) programmed to determine from the prevailing engine operating conditions the appropriate location for the exhaust valves with respect to the exhaust ports. This ability to control the position of the exhaust valve provides the scope for further improving the operation of two stroke cycle engines, and for the management of a range of problems which arise under particular operating conditions.

For example, it is generally the case that during high load and or wide open throttle (WOT) operation, such exhaust valves would typically be positioned to provide the earliest possible timing of opening of the corresponding exhaust ports as it is under these operating conditions that the engine is typically being "tuned" by the exhaust system and the earliest port opening time and greatest achievable flow area therethrough are required. This would typically provide for the attainment of maximum torque and power benefits from the engine. However, in trying to obtain maximum torque and power benefits from the engine, it can sometimes be the case that "knock" or "detonation" may occur in the cylinders of the engine, this primarily being due to the high temperature and pressure conditions generated in the combustion chambers due to the engine operating parameters and settings. As is well known in the area of engine technology, such knock is undesirable during engine operation and may potentially result in damage and/or deterioration of the engine if not remedied.

EP-A-0287038 discloses a two stroke engine having an exhaust port equipped with a valve to control the timing of the opening of the exhaust port. The valve is controlled to allow the engine to operate at a high maximum output, but to reduce the engine load to avoid excessive temperatures in the combustion chamber. A highly loaded condition of the engine can be sensed by detecting knocking with the exhaust timing then being retarded. The retardation may be effected in steps, and the exhaust valve control is immediately reset to a normal setting when knocking is no longer detected.

It is the object of the present invention to provide a method of using a valve provided at the exhaust port of an internal combustion engine to enhance the operation of the engine and/or control deterioration of the engine performance.

With this object in mind, there is provided according to the present invention a method of operating an internal combustion engine having at least one exhaust port communicating with each combustion chamber of the engine and a valve operably associated with at least one said exhaust port to vary the timing of the opening of the exhaust port, the method including retarding the timing of the opening of said exhaust port in response to the detection of knock occurring in the combustion chamber of the engine associated therewith, wherein said method is effected to control knock arising while the engine is being tuned by the exhaust system of the engine, a method of operating an internal combustion engine having at least one exhaust port communicating with each combustion chamber of the engine and a valve operably associated with at least one said exhaust port to vary the timing of the opening of the exhaust port, the method including retarding the timing of the opening of said exhaust port in response to the detection of knock occurring in the combustion chamber of the engine associated therewith, wherein said method is effected to control knock arising while the engine is being tuned by the exhaust system of the engine, the retardation of the timing of the opening of said exhaust port is initiated when knock above a predetermined level is detected and when the level of knock falls below said predetermined level, the retardation of the opening of the exhaust port is progressively reduced at a predetermined rate.

The effecting of the retarding of the opening of the exhaust port is preferably controlled by an ECU programmed to determine the severity of the duration of the knock and to make a determination as to when it is appropriate to retard the timing of the opening of the exhaust port for the purpose of controlling such knock. The ECU may be provided with an appropriate "look-up" map as would be known to those skilled in the art, the map containing figures relating to exhaust valve position settings in the event of knock occurring above the predetermined level. Values relating to the degree or amount of offset to be applied to a current exhaust valve position setting to control knock may also or alternatively be included.

When the engine is being tuned by the exhaust system, it is generally the case that the timing of the opening of the exhaust port will be advanced and the detection of knock may be remedied by successively retarding the timing of opening of the exhaust port.

Alternatively or in addition, the method may be effected to control knock arising while the engine is operating under high load conditions, and in particular, while the engine is operating at wide open throttle. In such circumstances, maximum or near maximum power and/or torque are typically desired from the engine and it is important to deal with any knock which may result under such operating conditions to avoid engine damage or deterioration.

The retardation of the timing of the opening of said exhaust port is initiated when knock above a predetermined level is detected. The timing of the opening of said exhaust port is preferably retarded by a preset amount upon initial detection of knock above said predetermined level, and is thereafter progressively retarded in response to the detection of the continuance of knock above said predetermined level. This amount of retardation is preferably progressively increased in a stepwise manner. The retardation of the timing of the opening of the exhaust port is preferably limited to a maximum allowable amount thereof.

When the level of knock falls below said predetermined level, the amount of retardation of the opening of the exhaust port is progressively reduced at a predetermined rate. The amount of retardation is preferably also progressively decreased in a stepwise manner.

Alternatively, the timing of the opening of the exhaust port could preferably be retarded by a relatively large amount in a single step in response to the detection of knock.

The Electronic Control Unit (ECU) controlling the retardation of the timing of the opening of the exhaust port, preferably determines, over successive actuations of said method over time, optimum timings for providing the most efficient control of knock within said combustion chamber.

Conveniently, this mode of knock control can be used alone or in combination with other known knock control techniques.

It has been found that the retarding of the opening of the exhaust port is effective in reducing or eliminating knock in a combustion chamber and it is believed that this may be achieved as a result of the increase in retained exhaust gas (i.e.: internal retained exhaust gas) in the combustion chamber which occurs as a result of retarding the timing of the opening of the exhaust port. As is known, increasing the amount of retained exhaust gas in the combustion chamber typically results in the temperature and pressure of the air and fuel mixture in the combustion chamber being reduced which is conducive to reducing or eliminating knock. Testing of the applicant's two stroke engines to date has shown that, at wide open throttle, retarding the timing of the opening of the exhaust port by an amount corresponding to as little as 5% of the total flow area of the exhaust port contributes significantly to reducing or eliminating knock. This 5% is generally measured from the position of the exhaust valve at the time of detection of the occurrence of the knock. The severity of the knock has been also found to decrease as the retardation of the timing of the opening of the exhaust port is increased.

Further, the retarding of the opening of the exhaust port which simultaneously advances the closing of the exhaust port is believed to result in the plugging pulse arriving at one of the exhaust ports of an appropriately tuned exhaust system having less time to increase the pressure in the respective cylinder thus lessening the risk of knocking occurring therein. At the same time, in the case where all of the exhaust valves are moved in unison, the duration that the exhaust port producing the plugging pulse is opened for is reduced as well as being opened later in the expansion stroke of the piston of the corresponding cylinder thereby reducing the duration and magnitude of the plugging pulse produced and thus contributing to the reduction of the cylinder pressure in the cylinder to be plugged. Hence, this is essentially achieved by virtue of inefficient or non-optimum plugging of the cylinder.

It is appreciated that in most multi-cylinder engines which utilise exhaust or power valves, all of the exhaust valves are moved in unison or by the same actuating means as a camshaft, whereas knock may typically be combustion chamber specific. Consequently, the above proposed procedure for reducing or eliminating knock would typically be effected simultaneously on all cylinders of the engine and may result in some reduction in engine torque. However, other techniques for controlling knock may be specific in relation to the actual cylinder in which knock has occurred. Hence, in the case where individually actuated exhaust valves are not provided on a multi-cylinder engine, the above discussed procedure for reducing knock by retarding the timing of the opening of the exhaust port of a cylinder may be used as a secondary measure in controlling knock when other more cylinder specific techniques have been applied and have perhaps been unsuccessful. Thus, in consideration of the above mentioned procedure and also in regard to the broad method as a whole, the effecting of the retarding of the opening of the exhaust port as a knock control procedure is preferably under the control of a suitably programmed ECU which is able to determine the severity and the duration of the knock and to make a determination as to when it is appropriate to retard the opening of the exhaust port for the purpose of controlling such knock. Preferably, the ECU is able to receive and act upon signals received from a suitably located knock sensor(s).

The retardation of the timing of the opening of the exhaust port can also be used to enhance the operation of the engine in a different manner in that such retardation generally results in a corresponding drop in the engine torque and can therefore be used to control such engine torque. For example, as will be discussed further hereinafter, it is advantageous to have a momentary drop in engine torque when there is a change of gear in the gearbox of an engine. Therefore, an appropriate signal indicating that a change of gear in a gearbox of the engine is occurring or is about to occur may be used to indicate that, for example, the engine torque is to be reduced.

To this end, the method of the present invention may include temporarily retarding the timing of the opening of said exhaust port in response to a signal indicating that a drop in engine torque is required.

The drop in engine torque is preferably required in response to a signal indicating that a change of gear in a gearbox of the engine is occurring or is about to occur.

The above described method may be adapted for use on two-stroke cycle engines.

To facilitate an understanding of the method of the present invention, reference is made to the accompanying drawings which illustrate a preferred embodiment of the present invention.

In the drawings,
Figure 1 is a sectional view of a two stroke cycle engine incorporating an exhaust valve operatively mounted in an exhaust port;
Figure 2 is a perspective view of an assembly of three exhaust valves mounted on a common shaft for use in a three cylinder two stroke cycle engine; and
Figure 3 is a flow-chart showing the operation of an ECU controlling the exhaust valves according to the present invention.

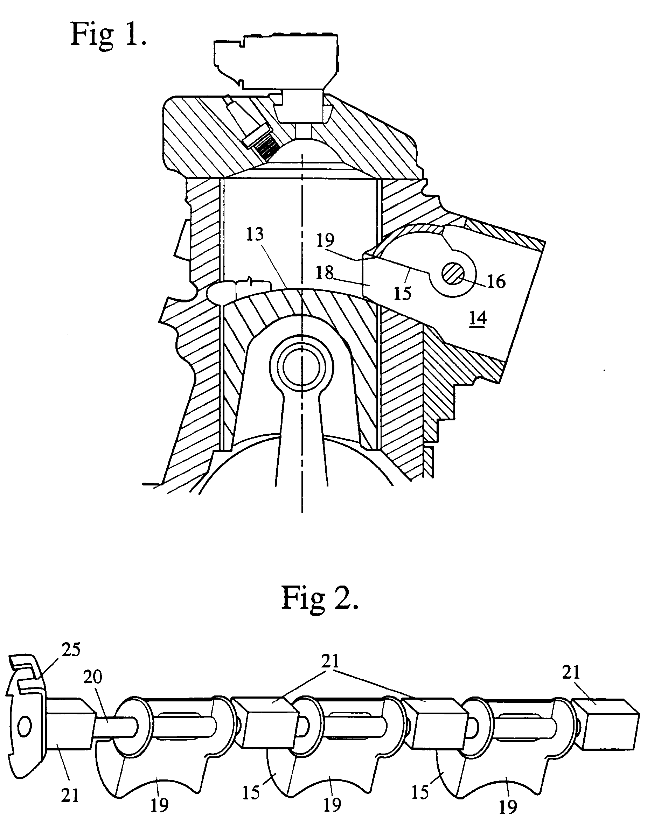

Referring now to Figure 1 of the drawings, the exhaust valve 15 is located within the exhaust passage 14 and mounted on a shaft 16 to angularly move about the axis of the shaft 16 extending transverse to an exhaust port 18 and co-operating with the exhaust port 18 in a generally known manner. The exhaust valve 15 does not typically completely close the port 18 at any stage in the operation of the engine, but generally serves to alter the effective position of the upper edge of the exhaust port 18 thereby altering the position in the stroke of the piston 13 where the exhaust port 18 commences to open. The exhaust valve 15 typically does not alter its position in a cyclic manner during each combustion cycle, but is controlled to change its position in response to engine operating conditions. Such exhaust valves and the operation thereof are known to those skilled in the design of modern two stroke engines. The exhaust valve 15 is shown in Figure 1 in the position where it is raised to its full extent to give the earliest exhaust port opening time, the maximum exhaust port open period and hence the maximum exhaust port flow area.

In a multi-cylinder engine, the exhaust valve 15 of each cylinder may be mounted on a common shaft 16 as shown in Figure 2 so that all of the exhaust valves 15 move in unison to vary the position of a control edge 19 of each exhaust valve 15 simultaneously and so that they each occupy the same position in the respective exhaust ports 18 at the same time. The shaft 16 is supported by bearings 21 at each end of the shaft 16 and intermediate each two adjacent exhaust valves 15. The bearings 21 are suitably mounted or formed integral with the engine block, an example of which is disclosed in the applicant's co-pending Australian Patent Application No. 22417/92.

A coupling 25 is mounted on an end of the shaft 16 for drive coupling to a suitable motor (not shown). The motor will rotate the shaft 16 in either direction to adjust the position of the control edge 19 of the exhaust valves 15 with respect to the exhaust ports 18. Physical stops 26 are provided on the coupling 25 to limit the extent of movement of the exhaust valves 15 with respect to the exhaust ports 18, the physical stops 26 being appropriately arranged with respect to a stationary pin(not shown). The operation of the motor is typically controlled by an electronic control unit (ECU) programmed to receive appropriate signals indicating the state of a wide range of engine operating conditions and to determine therefrom the position in which the exhaust valves 15 should be located with respect to the exhaust ports 18, or what movements the exhaust valves 15 should perform. Accordingly, a suitable program can be stored in the ECU to perform the knock control function using the exhaust valves 15 as herein referred to and disclosed. Such programming can be readily carried out by people of normal skill in the programming of ECU's to be employed in the management of the operation of internal combustion engines.

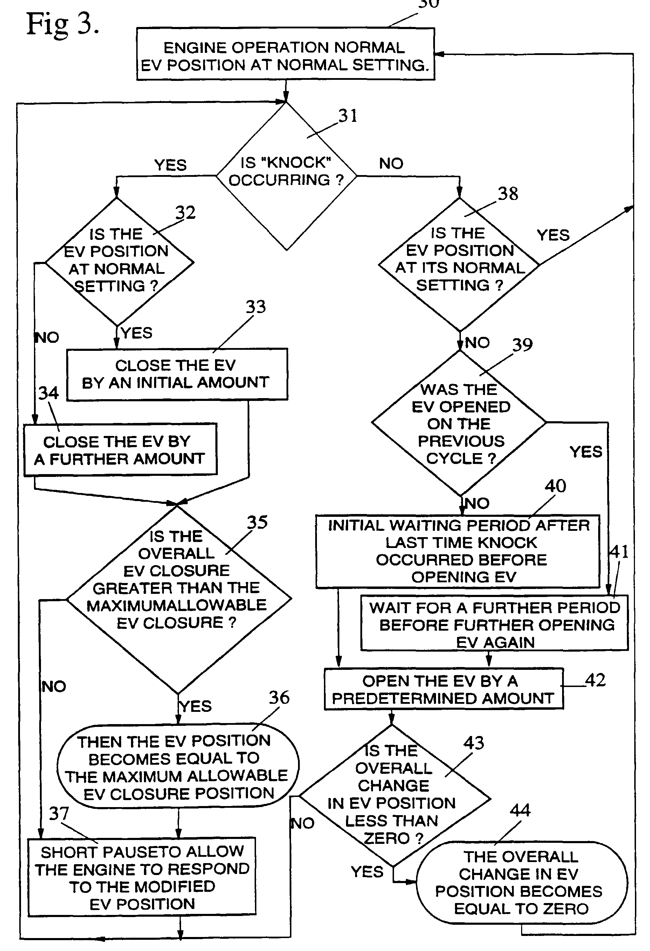

The flow chart in Figure 3 shows a preferred control strategy of the ECU when it is providing a knock control function. Other control strategies for controlling the knock by means of the exhaust valve are however also possible and envisaged. Knock can typically be detected by a knock sensor or any other convenient means for determining the presence of knock. When no knock is occurring or the knock is below an acceptable level of severity, the exhaust valve 15 will be at a setting as determined by the ECU in response to other engine operating conditions and parameters. For example, depending on the speed and load of the engine, the exhaust valve 15 may be positioned to enable the engine to provide maximum power or alternatively to provide for emission control for the engine. Further, the position setting of the exhaust valve 15 may be dependent upon other factors such as, for example, the engine operating temperature or the operating temperature of any catalytic treatment means in the engine exhaust system. Hence, at the time of the first detection of the occurrence of knock, the exhaust valve 15 will be at some "normal" setting, as shown at step 30, as determined by the ECU in regard to the prevailing engine operating conditions. The closure of the exhaust valve 15 away from this normal setting results in retardation of the timing of the opening of the exhaust port 18.

If no knock above a predetermined level is determined at step 31, then the ECU checks that the exhaust valve position is at its' normal setting in step 38 and if so, returns to step 30. However, if the presence of knock above a predetermined level is determined at step 31, then the position of the exhaust valve 15 is checked at step 32 to determine whether it is at its normal setting. If the exhaust valve 15 is at its normal setting, then the exhaust valve 15 is closed by an initial amount as shown in step 33. If there however has already been some closure of the exhaust valve 15 from its normal setting, that is, knock has previously been detected and some closure of the exhaust valve 15 in response thereto has already occurred, then the exhaust valve 15 is closed by a further amount as shown in step 34. The closing of the exhaust valve 15 is then checked against a predetermined maximum allowable closure of the exhaust valve position at step 35, and the closure thereof is limited by this maximum allowable closure at step 36 in the event that the closure of the exhaust valve 15 has exceeded the predetermined limit. There is subsequently a short pause to allow the engine to respond to the closure of the exhaust valve 15 as shown in step 37 after which the ECU once again determines if knock is still occurring in the engine at step 31. If knock is still occurring, this cycle is repeated until the knock is no longer present or is below an acceptable predetermined level of severity. This progressive closure of the exhaust valve 15 results in an increase in the retardation of the timing of the opening of the exhaust port 18 in a stepwise manner.

At the stage where knock is no longer occurring, the ECU firstly checks to see whether the exhaust valve 15 is at its normal setting at step 38. If the exhaust valve 15 is not at its normal setting as would be the case if it has previously been closed to control knock, then the ECU checks at step 39 whether the exhaust valve 15 has been opened to a position closer to the normal setting of the exhaust valve 15 on the previous cycle. Opening of the exhaust valve 15 reduces the retardation of the timing of the opening of the exhaust port 18. If there has been no previous opening of the exhaust valve 15, then the ECU waits a predetermined period after the last time that knock occurred or was above an allowable level before opening the exhaust valve 15 by a predetermined amount as shown at steps 40 and 42. Otherwise, if there has previously been some opening of the exhaust valve 15, the ECU waits a further period before further opening the exhaust valve 15 by a predetermined amount as shown at steps 41 and 42. This therefore allows a progressive reduction of the retardation of the opening of the exhaust port 18.

In step 43, the ECU checks to see whether the overall changes in the exhaust valve position are less than zero. In other words, the ECU checks to see if the exhaust valve position is back to its normal setting. If it is not back at its normal setting, then the ECU returns to step 31 to again repeat the cycle. If the response to step 43 is positive, then the overall change in the exhaust valve position is set to zero, that is, the overall exhaust valve position is set to the normal position thereof, to prevent overshooting of the normal setting. The ECU then returns to normal engine operation at step 30.

It is to be appreciated that other decision steps can be carried out before the implementation of the knock control routine or may of course be added to the routine itself. For example, before any knock control measures are taken, the ECU may initially check that the engine is operating within a certain speed range indicative of the engine being tuned by the exhaust system or that the engine is operating under WOT conditions.

The initial and further amounts of closing of the exhaust valve 15 when knock is being detected, the predetermined amount of opening of the exhaust valve 15 after the knock has been controlled, and the predetermined delays used in the knock control strategy are all typically pre-programmed into the ECU on the basis of empirical data obtained experimentally. However, it is to be appreciated that the ECU may be adapted to "learn" over time so that the number of iterations or cycles of the control strategy required to control knock can be reduced. This could be achieved by adapting the ECU to determine from the engine operating history the particular settings of the exhaust valve 15 and the amount and timing of the closing and opening of the exhaust valve 15 which are the most effective for controlling knock over a range of different operating conditions and parameters. This will accordingly result in improved response in controlling any engine knock.

The above proposal for the selective retarding of the opening of the exhaust port 18 of a two stroke engine has further application in the management of the operation of a two stroke cycle engine in regard to torque control as the selective retarding of the opening of the exhaust port 18 is likely to bring about a reduction in the engine torque. Accordingly, as alluded to hereinbefore, it is possible to control or influence various aspects of engine operation where it is desired to control such engine torque.

For example, the above proposal may have applications in the control of a two-stroke cycle engine when coupled through a gearbox to an appropriate load such as the drive wheels of a vehicle. In particular, in such a vehicle, when the gear ratio is being changed while the vehicle is in motion and being propelled by the engine, it is recognised that when effecting such a gear change, it may be desirable to momentarily reduce the torque delivered by the engine to achieve a smooth gear change, and reduce tipping of the engine thereby eliminating potential discomfort and improving smoothness to the vehicle occupants.

In a two-stroke cycle direct injected engine, two possible methods to reduce torque are to reduce the fuelling rate and to retard the ignition, the latter method also being commonly used in four-stroke engines. However, in some circumstances it may not be preferable or adequate to reduce engine torque by these known methods. Hence, it is evident that a different way to reduce engine torque is to quickly close the exhaust valve 15. In such an application, only small amounts of movement are typically required and the exhaust valve 15 is not generally required to be completely closed.

In this proposal, the retarding of the opening of the exhaust port 18 would be under the control of a programmed ECU which would include provision for receiving a signal when a gear change is to occur and, in response to that signal, the ECU would affect the required retarding of the timing of the exhaust port opening. The extent to which such retardation is influenced by factors such as the engine speed and load at the time when the gear change is being made will typically be accounted for by the ECU which will be programmed to determine the necessary timing and duration of the retardation. It is however to be understood that the above discussed torque control by exhaust valve timing can be used in conjunction with fuelling rate variation and/or ignition retardation for torque control purposes if desired. Further and as alluded to hereinbefore, the application of controlling torque via exhaust valve closure may be applicable to other situations of engine operation.

The present invention has been described primarily with respect to two-stroke engines. However, it should be appreciated that this invention is also applicable for four-stroke engines, particularly where the four-stroke engine has variable valve timing.

## Claims

1. A method of operating an internal combustion engine having at least one exhaust port communicating with each combustion chamber of the engine and a valve operably associated with at least one said exhaust port to vary the timing of the opening of the exhaust port, the method including retarding the timing of the opening of said exhaust port in response to the detection of knock occurring in the combustion chamber of the engine associated therewith, wherein said method is effected to control knock arising while the engine is being tuned by the exhaust system of the engine, the retardation of the timing of the opening of said exhaust port is initiated when knock above a predetermined level is detected and when the level of knock falls below said predetermined level, the retardation of the opening of the exhaust port is progressively reduced at a predetermined rate.

2. A method according to claim 1, wherein said method is effected to control knock arising while the engine is operating at high load.

3. A method according to claim 1 or 2, wherein said method is effected to control knock arising while the engine is operating at wide open throttle.

4. A method according to claim 1,2 or 3, wherein the timing of the opening of said exhaust port is retarded by a preset amount upon initial detection of knock above said predetermined level, and thereafter progressively retarded in response to the detection of the continuance of knock above said predetermined level.

5. A method according to claim 4, wherein the amount of retardation is progressively increased in a stepwise manner.

6. A method according to claim 4 or 5, wherein the retardation of the timing of the opening of the exhaust port is limited to a maximum allowable amount thereof.

7. A method according to any one of claims 1 to 6, wherein the amount of retardation is progressively decreased in a stepwise manner.

8. A method according to claim 1,2 or 3, wherein the timing of the opening of the exhaust port is retarded by a relatively large amount in a single step in response to the detection of knock.

9. A method according to any one of the preceding claims wherein an Electronic Control Unit (ECU) controls the retardation of the timing of the opening of the exhaust port, the ECU determining, over successive actuations of said method over time, optimum timings for providing the most efficient control of knock within said combustion chamber.

10. A method according to any one of the preceding claims, wherein said method is used in combination with other known knock control techniques.

11. A method according to any one of the preceding claims, wherein the timing of the opening of the exhaust port is also momentarily retarded an additional amount in response to a signal indicating that a drop in engine torque is required.

12. A method according to claim 11, wherein said signal indicates that a change of gear in a gearbox of the engine is occurring or is about to occur.

13. A method according to any one of the preceding claims, wherein said method is adapted for use on a two-stroke cycle engine.

## Patentansprüche

1. Verfahren zum Betreiben einer Verbrennungsmaschine mit wenigstens einer Auslaßöffnung, die mit jeder Verbrennungskammer der Maschine verbunden ist, und einem Ventil, das betriebsmäßig der wenigstens einen Auslaßöffnung zugeordnet ist, um die Öffnungszeiten der Auslaßöffnung zu verändern, welches Verfahren den Zeitpunkt des Öffnens der Auslaßöffnung verzögert in Abhängigkeit von der Erfassung eines Klopfens, das in der hiermit verbundenen Verbrennungskammer der Maschine auftritt, worin das Verfahren so wirkt, daß es das Klopfen steuert, welches auftritt, während die Maschine durch das Abgassystem der Maschine abgestimmt wird, wobei die Verzögerung des Zeitpunktes des Öffnens der Auslaßöffnung eingeleitet wird, wenn ein Klopfen oberhalb eines vorbestimmten Pegels erfaßt wird, und wenn der Pegel des Klopfens unter den vorbestimmten Pegel fällt, wird die Verzögerung des Öffnens der Auslaßöffnung fortschreitend mit einer vorbestimmten Geschwindigkeit reduziert.

2. Verfahren nach Anspruch 1, worin das Verfahren so wirkt, daß das Klopfen gesteuert wird, welches auftritt, während die Maschine mit einer hohen Last arbeitet.

3. Verfahren nach Anspruch 1 oder 2, worin das Verfahren so wirkt, daß das Klopfen gesteuert wird, während die Maschine mit einem weit geöffneten Drosselventil arbeitet.

4. Verfahren nach Anspruch 1, 2 oder 3, worin der Zeitpunkt des Öffnens des Auslaßventils um einen voreingestellten Wert verzögert wird nach einer anfänglichen Erfassung des Klopfens oberhalb des vorbestimmten Pegels, und danach fortschreitend verzögert wird in Abhängigkeit von der Erfassung des Fortdauerns des Klopfens oberhalb des vorbestimmten Pegels.

5. Verfahren nach Anspruch 4, worin die Größe der Verzögerung schrittweise fortschreitend zunimmt.

6. Verfahren nach Anspruch 4 oder 5, worin die Verzögerung des Zeitpunktes des Öffnens der Auslaßöffnung auf einen maximal zulässigen Wert begrenzt wird.

7. Verfahren nach einem der Ansprüche 1 bis 6, worin die Größe der Verzögerung schrittweise fortschreitend abnimmt.

8. Verfahren nach einem der vorhergehenden Ansprüche, worin der Zeitpunkt des Öffnens der Auslaßöffnung um einen relativ großen Wert in einem einzelnen Schritt als Antwort auf die Erfassung des Klopfens verzögert wird.

9. Verfahren nach einem der vorhergehenden Ansprüche, worin eine elektronische Steuereinheit (ECU) die Verzögerung des Zeitpunktes des Öffnens der Auslaßöffnung steuert, wobei die ECU über aufeinanderfolgende Betätigungen des Verfahrens über die Zeit optimale Zeitpunkte bestimmt, um die wirksamste Steuerung des Klopfens in der Verbrennungskammer zu erhalten.

10. Verfahren nach einem der vorhergehenden Ansprüche, worin das Verfahren in Verbindung mit anderen bekannten Klopfsteuertechniken verwendet wird.

11. Verfahren nach einem der vorhergehenden Ansprüche, worin der Zeitpunkt des Öffnens der Auslaßöffnung auch augenblicklich um einen zusätzlichen Wert verzögert wird als Antwort auf ein Signal, welches anzeigt, daß ein Abfall des Maschinendrehmoments erforderlich ist.

12. Verfahren nach Anspruch 11, worin das Signal anzeigt, daß eine Änderung der Übersetzung in einem Getriebe der Maschine stattfindet oder gleich stattfinden wird.

13. Verfahren nach einem der vorhergehenden Ansprüche, worin das Verfahren zur Verwendung bei einer Zweitaktmaschine geeignet ist.

## Revendications

1. Procéder pour faire fonctionner un moteur à combustion interne possédant au moins un orifice d'échappement communiquant avec chaque chambre de combustion du moteur et une soupape associée de façon opérationnelle audit au moins un orifice d'échappement pour modifier l'instant d'ouverture de l'orifice d'échappement, ledit procédé incluant le retardement de l'instant d'ouverture dudit orifice d'échappement en réponse à la détection d'un cognement apparaissant dans la chambre de combustion du moteur, qui lui est associée, ledit procédé étant mis en oeuvre pour commander le cognement qui apparaît alors que le moteur est réglé par le système d'échappement du moteur, le retardement de l'instant d'ouverture dudit orifice d'échappement étant déclenché lorsqu'un cognement supérieur à un niveau prédéterminé est détecté, alors que, lorsque le niveau du cognement tombe au-dessous dudit niveau prédéterminé, le retardement de l'ouverture de l'orifice d'échappement est progressivement réduit à une cadence prédéterminée.

2. Procédé selon la revendication 1, selon lequel ledit procédé est mis en oeuvre pour commander le cognement apparaissant alors que le moteur fonctionne sous charge élevée.

3. Procédé selon la revendication 1 ou 2, selon lequel le procédé est mis en oeuvre pour commander le cognement apparaissant alors que le moteur fonctionne avec le papillon des gaz largement ouvert.

4. Procédé selon la revendication 1, 2 ou 3, selon lequel l'instant d'ouverture de l'orifice d'échappement est retardé d'une durée préréglée lors de la détection initiale du cognement au-dessus dudit niveau prédéterminé, puis est retardé progressivement en réponse à la détection de la poursuite du cognement au-dessus dudit niveau prédéterminé.

5. Procédé selon la revendication 4, selon lequel la valeur du retard est accrue progressivement d'une manière échelonnée.

6. Procédé selon la revendication 4 ou 5, selon lequel le retardement de l'instant d'ouverture de l'orifice d'échappement est limité à une valeur maximale admissible.

7. Procédé selon l'une quelconque des revendications 1 à 6, selon lequel la valeur du retard est réduite progressivement d'une manière échelonnée.

8. Procédé selon la revendication 1, 2 ou 3, selon lequel l'instant d'ouverture de l'orifice d'échappement est retardé d'une durée relativement importante en une seule étape, en réponse à la détection du cognement.

9. Procédé selon l'une quelconque des revendications précédentes, selon lequel une unité de commande électronique (ECU) commande le retardement de l'instant d'ouverture de l'orifice d'échappement, l'unité ECU déterminant, au cours de mises en oeuvre successives dudit procédé dans le temps, des instants optimaux pour obtenir la commande la plus efficace du cognement dans ladite chambre de combustion.

10. Procédé selon l'une quelconque des revendications précédentes, selon lequel ledit procédé est utilisé en combinaison avec deux autres techniques de commande du cognement.

11. Procédé selon l'une quelconque des revendications précédentes, selon lequel l'instant d'ouverture de l'orifice d'échappement est également retardé temporairement d'une durée supplémentaire en réponse à un signal indiquant qu'une réduction du couple moteur est requise.

12. Procédé selon la revendication 11, selon lequel ledit signal indique qu'un changement de vitesse dans une boîte de vitesses du moteur est en cours ou est sur le point de se produire.

13. Procédé selon l'une quelconque des revendications précédentes, selon lequel ledit procédé est adapté pour être utilisé dans un moteur deux temps.
